# DEMANDE DE BREVET EUROPEEN

(11) **EP 4 220 504 A1**
(43) Date de publication de la demande: **02.08.2023**
(21) Numéro de dépôt: 22305084.0
(22) Date de dépôt: 27.01.2022
(51) Int. Cl.: G06Q 10/04

(54) **PROCÉDÉ, PROGRAMME D'ORDINATEUR ET DISPOSITIF DE PRÉDICTION DE PRÉSENCE DE POISSON**

(71) Demandeur: Bull SAS, 78340 Les Clayes-sous-Bois (FR); Instituut voor Landbouw- en Visserijonderzoek (ILVO), 9820 Merelbeke (BE)
(72) Inventeur: GUEGAN MARAT, Sophie, 38420 REVEL (FR); OSPICI, Matthieu, 38000 GRENOBLE (FR); SYS, Klaas, 9890 DIKKELVENNE (BE)
(74) Mandataire: IPAZ

(57) **Abrégé**

L'invention concerne un procédé (100) de prédiction de présence de poisson en un point maritime, ledit procédé (100) comprenant les étapes suivantes :
-estimation (104), de températures estimées audit point maritime pour un nombre N de jour(s) futur(s), suivant immédiatement la date actuelle, par un premier modèle prenant en entrée des températures mesurées audit point maritime sur un nombre M de jour(s) passé(s) précédent immédiatement ladite date actuelle ; et
- prédiction (106), pour chaque jour futur, d'une probabilité de présence de poisson, par un deuxième modèle prenant les températures estimées pour ledit jour futur.

Elle concerne également un programme d'ordinateur et un dispositif mettant en œuvre un tel procédé.

## Description

La présente invention concerne un procédé de prédiction de présence de poisson, en particulier en un point maritime ou dans une zone maritime. Elle concerne également un programme d'ordinateur et un dispositif mettant en œuvre un tel procédé.

Le domaine de l'invention est de manière générale le domaine de la prédiction de zones de pêche.

### État de la technique

Pouvoir prédire à quel emplacement dans la mer se trouvent des poissons est extrêmement utile, par exemple pour réduire le temps et la distance des trajets pour la pêche, la gestion dynamique des mers et océans notamment en matière de trafic, la gestion des stocks de poisson, etc.

Il existe déjà des solutions pour prédire une donnée de probabilité de présence de poisson dans telle ou telle zone maritime. Ces solutions se basent principalement sur les paramètres environnementaux tels que la température mesurée de l'eau, la présence de vent, etc. qui sont croisées avec des données issues des entreprises de pêche. Un modèle intelligent prend en entrée ces données pour prédire des zones de pêche.

Cependant, les solutions de prédiction actuelles fournissent une prédiction de présence de poisson concernant le jour J en se basant sur des paramètres environnementaux, et en particulier la température, mesurés la veille. Ces solutions supposent donc que les paramètres environnementaux varient peu sur deux jours consécutifs. De ce fait, ces solutions souffrent d'un défaut de précision. De plus, les solutions actuelles permettent d'obtenir des prédictions qui sont limitées dans le temps, en général la veille pour le lendemain, ce qui est peu flexible.

Un but de la présente invention est de remédier à au moins un des inconvénients de l'état de la technique.

Un autre but de l'invention est de proposer une solution de prédiction d'une probabilité de présence de poisson plus précise.

Un autre but de l'invention est de proposer une solution de prédiction d'une probabilité de présence de poisson permettant de réaliser une prédiction sur une plus grande durée.

### Exposé de l'invention

L'invention propose d'atteindre au moins l'un des buts précités par un procédé de prédiction de présence de poisson en un point maritime, ledit procédé comprenant les étapes suivantes :
- estimation, de températures estimées audit point maritime pour un nombre N de jour(s) futur(s), à partir de la date actuelle, par un premier modèle prenant en entrée des températures mesurées audit point maritime sur un nombre M de jour(s) passé(s) précédant immédiatement ladite date actuelle ; et
- prédiction, pour chaque jour futur, d'une probabilité de présence de poisson, par un deuxième modèle prenant en entrée la température estimée pour ledit jour futur.

Ainsi, le procédé selon l'invention propose d'estimer d'abord la température du point maritime, pour chaque jour futur à partir des températures observées et mesurées audit point maritime sur les M jours passés, précédant immédiatement la date. Une fois la température estimée pour chaque jour futur, le procédé selon l'invention propose de déterminer une probabilité de présence de poisson au point maritime à partir de la température estimée pour ledit jour à venir. Ainsi, la solution proposée réalise une estimation de la température pour chaque jour futur concerné par la prédiction, et ne fait pas l'approximation que les paramètres environnementaux varient peu, contrairement aux solutions de prédiction actuelles.

De plus, le procédé selon l'invention permet de réaliser une prédiction précise d'une probabilité de présence de poisson pour un point maritime puisqu'elle prend en compte les températures mesurées sur M jours passés par rapport à la date actuelle, ce qui permet de réaliser une meilleure estimation de la température pour chaque jour futur. Cela permet de prendre en compte la dynamique de l'évolution de la température, obtenir une température estimée plus précise pour chaque jour futur, et donne par conséquent une prédiction plus précise de la probabilité de présence de poisson.

De plus, le procédé selon l'invention permet de prédire une probabilité de présence de poisson sur N jours à venir, de sorte que la probabilité peut être estimée pour plusieurs jours à venir, et pas uniquement pour le jour en cours, ou le lendemain.

Dans la présente demande, par « probabilité » on entend une probabilité exprimée soit sous la forme d'un nombre, par exemple un pourcentage ou une valeur normalisée, ou une probabilité exprimée sous la forme d'une classe parmi au moins deux classes : « probable », « peu probable », « très probable », etc.

Par « jour futur », on entend un jour à partir de la date actuelle. Suivant un exemple de réalisation, la date actuelle peut être un jour futur. Dans ce cas les N jours futurs comprennent le jour actuel. Suivant un autre exemple de réalisation, la date actuelle n'est pas un jour futur. Dans ce cas les N jours futurs ne comprennent pas le jour actuel.

Par « jour(s) passé(s) », on entend un ou plusieurs jours précédant immédiatement la date actuelle, ou le jour actuel.

Par « point maritime », on entend un emplacement géographique dans une mer, un océan ou un fleuve. Suivant des modes de réalisation, le point maritime peut être exprimé en coordonnées GPS, ou dans un système de coordonnées (X,Y) sur une image d'une zone comprenant ledit point maritime.

Suivant une caractéristique avantageuse, la température mesurée d'au moins un point maritime pour au moins un jour passé peut être obtenue à partir d'une image satellite comprenant ledit point maritime.

Dans ce cas, l'image satellite est analysée pour en déduire la température du point maritime. Par exemple, l'image satellite peut être en couleur, ou dans un dégradé d'une couleur telle que par exemple dans un dégradé de rouge. Chaque couleur, ou nuance de couleur, peut indiquer une valeur différente de température. Dans ce cas, la température du point maritime peut être obtenue en lisant la couleur, la nuance de couleur, et en se référant à un référentiel indiquant la température correspondant à cette couleur, ou cette nuance de couleur.

Suivant des modes de réalisation, le premier modèle peut prendre en entrée des valeurs de température.

Suivant des modes de réalisation, le premier modèle peut prendre en entrée des valeurs de couleur, ou de nuance de couleur.

Suivant des modes de réalisation, le procédé selon l'invention peut comprendre une prédiction d'une probabilité de présence de poisson pour plusieurs points maritimes formant une zone maritime.

Ainsi, il est possible de déterminer la probabilité de présence de poisson dans une zone maritime à partir des probabilités estimées pour plusieurs, voir tous les points, de la zone maritime.

Dans ce cas, chaque point maritime peut être traité individuellement.

Avantageusement, le procédé selon l'invention peut comprendre une étape de calcul d'une probabilité de présence de poisson dans la zone maritime à partir des probabilités estimées pour plusieurs, et en particulier tous les, points maritimes formant une zone maritime.

La probabilité associée à la zone maritime peut être calculée avec toute relation prédéterminée prenant en entrée des probabilités de présence de poisson estimées pour plusieurs, et en particulier tous les, points maritimes faisant partie de la zone maritime.

Par exemple, la probabilité de présence de poisson pour la zone maritime peut être une moyenne des probabilités de présence de poisson estimées pour plusieurs, et en particulier tous les, points maritimes de ladite zone maritime.

Suivant des modes de réalisation, le deuxième modèle peut être commun à au moins deux espèces de poisson.

Alternativement, le deuxième modèle peut être spécifique à une espèce de poisson. Par exemple, il est possible d'utiliser un deuxième modèle spécifique à la plie, un deuxième modèle spécifique à la sole, etc.

Suivant des modes de réalisation, le nombre N de jours futurs est supérieur ou égal à 2 de sorte que la prédiction de la donnée de probabilité est réalisée pour plusieurs jours futurs.

Ainsi, le procédé selon l'invention permet de réaliser une prédiction de présence de poisson sur une durée future plus longue que les solutions actuelles.

Suivant un exemple de réalisation nullement limitatif, N=4.

Suivant des modes de réalisation, le nombre M de jours passés est supérieure ou égal à 2 de sorte que la prédiction de probabilité est réalisée à partir de données de température mesurées pour plusieurs jours passés.

Ainsi, la prédiction de la température pour chaque jour futur sera plus juste car elle prendra en compte l'évolution, et la dynamique d'évolution, de la température dans le temps de sorte que la prédiction de la probabilité de présence de poisson sur chaque jour futur sera plus précise.

Suivant un exemple de réalisation nullement limitatif M=4.

Le premier modèle peut être tout type de modèle intelligent.

Suivant des modes de réalisation, le premier modèle peut être un réseau neuronal récurrent, et en particulier un réseau neuronal récurrent à apprentissage profond.

Suivant un exemple de réalisation préféré, sans perte de généralité, le premier modèle peut être un réseau neuronal PredRNN++.

Le procédé selon l'invention peut en outre comprendre une phase d'entrainement dudit premier modèle avec une première base de jeux d'entrainement comprenant chacun des températures mesurées sur MxN jours qui se suivent.

Lors de la phase d'entrainement, pour chaque jeu d'entrainement, les températures mesurées des M jours sont données en entrées du réseau neuronal pour estimer des températures pour les N jours. Les températures mesurées des N jours sont utilisées pour estimer une erreur. L'erreur peut être la différence entre les températures estimées pour les N jours et les températures réellement mesurées pour les N jours. Les erreurs obtenues pour tous les jeux d'entrainement peuvent être utilisées pour mettre à jour les coefficients du réseau neuronal, suivant un algorithme d'apprentissage, tel que l'algorithme de rétropropagation du gradient par exemple.

L'entrainement du réseau neuronal peut être testé sur une partie du jeu d'entrainement non utilisée pour l'apprentissage.

Alternativement, l'entrainement du réseau neuronal peut être testé en fonction de l'évolution d'une erreur globale calculée à partir des erreurs individuelles obtenues pour chaque jeu d'entrainement. Suivant des exemples non limitatifs, l'erreur globale peut être une moyenne, ou une somme, des erreurs individuelles. Le réseau neuronal peut être considéré comme suffisamment entrainé lorsque l'erreur globale ne varie pas pendant cinq itérations de la phase d'entrainement.

Le deuxième modèle peut être tout type de modèle intelligent.

Suivant des modes de réalisation, le deuxième modèle peut être un arbre décisionnel, et en particulier un arbre décisionnel de type gradient boosting, également appelé « Gradient Boosting Decision Tree ».

Le procédé selon l'invention peut en outre comprendre une phase d'entrainement dudit deuxième modèle avec une deuxième base de jeux d'entrainement comprenant chacun :
- des températures mesurées pour N jours, et
- des données de présence de poisson sur lesdits N jours.

Les données de présence de poisson peuvent être obtenues depuis une base de données alimentées par les entreprises de pêche, ou directement auprès des entreprises de pêche. Les données de présence de poisson données en entrée du modèle peuvent être des données transformées en donnée de probabilité, en particulier normalisées.

Lors de la phase d'entrainement, pour chaque jeu d'entrainement, les températures mesurées des N jours sont données en entrées du deuxième pour estimer des probabilités de présence de poisson pour les N jours. Les données de présence de poisson mesurées des N jours sont utilisées pour estimer une erreur. L'erreur peut être la différence entre les probabilités de présence de poisson estimées pour les N jours et les données de présence de poisson réellement mesurées pour les N jours. Les erreurs obtenues pour tous les jeux d'entrainement peuvent être utilisées pour mettre à jour le deuxième modèle.

L'apprentissage du deuxième modèle peut par exemple être réalisé par un algorithme basé sur les histogrammes, en particulier lorsque le deuxième modèle est un arbre décisionnel.

L'entrainement du deuxième modèle peut être testé sur une partie du jeu d'entrainement non utilisée pour l'apprentissage.

Selon un autre aspect de l'invention, il est proposé un programme d'ordinateur comprenant des instructions exécutables qui, lorsqu'elles sont exécutées par un appareil informatique, mettent en en œuvre toutes les étapes du procédé selon l'invention de prédiction de présence de poisson.

Le programme d'ordinateur peut être en tout langage informatique, tel que par exemple en langage machine, en C, C++, JAVA, Python, etc.

Selon un autre aspect de l'invention, il est proposé un dispositif de prédiction de présence de poisson en un point maritime comprenant des moyens configurés pour mettre en œuvre toutes les étapes du procédé selon l'invention de prédiction de présence de poisson.

Le dispositif selon l'invention peut être tout type d'appareil tel qu'un serveur, un ordinateur, une tablette, un calculateur, un processeur, une puce informatique, programmé pour mettre en œuvre le procédé selon l'invention, par exemple en exécutant le programme d'ordinateur selon l'invention.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un premier exemple de réalisation non limitatif d'un procédé selon l'invention ;
- la FIGURE 2 est une représentation schématique d'un deuxième exemple de réalisation non limitatif d'un procédé selon l'invention ; et
- la FIGURE 3 est une représentation schématique d'un exemple de réalisation non limitatif d'un dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

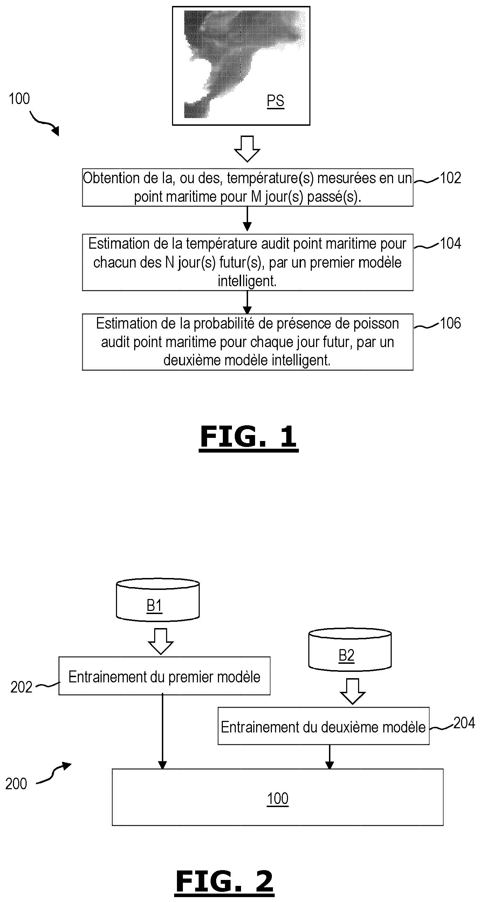

La FIGURE 1 est une représentation schématique d'un premier exemple de réalisation non limitatif d'un procédé selon la présente invention.

Le procédé 100 de la FIGURE 1 peut être utilisé pour prédire la présence de poisson en un point maritime. Le procédé 100 peut être réitéré pour plusieurs points maritimes, à tour de rôle ou de manière simultanée, formant une zone maritime pour prédire la présence de poisson dans ladite zone maritime. Ainsi, le procédé 100 peut être utilisé pour détecter les zones de pêche.

Le procédé 100 peut être utilisé pour prédire la présence, et donc détecter les zones de pêche, pour une espèce de poisson ou pour plusieurs espèces de poisson. Dans la suite, et sans perte de généralité, le procédé 100 est utilisé pour prédire la présence, et donc détecter les zones de pêche, pour une seule espèce de poisson, tel que par exemple la sole.

Le procédé 100 comprend une étape 102 pour obtenir la(les) température(s) mesurée(s) en un point maritime, pour M jour(s) passé(s) précédant immédiatement la date actuelle, ou le jour actuel, notée J. Suivant un exemple de réalisation nullement limitatif M=4 de sorte que les températures obtenues lors de l'étape 102 sont les températures pour les jours J-1, J-2, J-3 et J-4 lors de mesurées. Ces températures sont notées TMJ-1, TMJ-2, TMJ-3 et TMJ-4.

Suivant un exemple de réalisation mais nullement limitatif, pour un jour passé, la température au point maritime peut être obtenue à partir d'une photo satellite, PS, tel que la photo représentée sur la FIGURE 1. Dans ce cas, le point maritime est identifié sur la photo avec des coordonnées (X,Y). La température au point maritime est déduite de la couleur, ou du contraste dudit point sur la photo. Dans l'exemple représenté, chaque point maritime correspond à une température normalisée entre 0 et 1. Chaque point terrestre, représenté en blanc, à une valeur négative, par exemple -5 dans l'exemple donné. Ainsi, la température du point maritime est lue à partir de la photo satellite PS, aux coordonnées (X,Y) correspondant à ce point maritime sur la photo PS.

Lors d'une étape 104, les températures TMJ-1, TMJ-2, TMJ-3 et TMJ-4 obtenues à l'étape 102 sont données en entrée d'un premier modèle intelligent préalablement entrainé, pour estimer la température pour N jour(s) futur(s) à partir de la date actuelle.

Dans l'exemple représenté, de manière nullement limitative, la date actuelle est incluse dans le(s) N jour(s) futur(s).

Suivant un exemple de réalisation nullement limitatif N=4 de sorte que, lors de l'étape 104, les températures estimées lors de l'étape 102 sont les températures pour les jours J, J+1, J+2 et J+3. Ces températures sont notées TEJ, TEJ+1, TEJ+2 et TEJ+3.

Le premier modèle peut être un réseau neuronal PredRNN++, préalablement entrainé pour estimer la température sur N jours à partir des températures mesurées sur M jours données en entrée dudit réseau neuronal.

Lors d'une étape 106, les températures TEJ, TEJ+1, TEJ+2 et TEJ+3 estimées à l'étape 104 sont données en entrée d'un deuxième modèle intelligent préalablement entrainé, pour estimer une probabilité de présence de poisson au point maritime, pour chaque jour futur.

Ainsi, le deuxième modèle fournit N probabilités, chacune pour un jour futur. Suivant l'exemple de réalisation nullement limitatif où N=4, l'étape 106 fournit les valeurs de probabilité PJ, PJ+1, PJ+2 et PJ+3.

Le deuxième modèle peut être un arbre décisionnel, par exemple un arbre décisionnel de type Gradient Boosting Decision Tree, préalablement entrainé pour estimer la probabilité de présence de poisson sur N jour(s) en fonction de valeurs de températures des N jours données en entrée dudit réseau neuronal.

La probabilité fournie par le deuxième modèle peut être une valeur numérique, en particulier normalisée tel qu'un pourcentage, ou une valeur normalisée comprise entre 0 et 1. Alternativement, la probabilité fournie peut être une classe parmi au moins deux classes prédéfinies, tel que par exemple des classes "très faible", "faible", "moyen", "fort", "très fort", etc.

On comprend que le procédé 100 peut être réitéré pour plusieurs, et en particulier, tous les points maritimes de la photo PS pour estimer la présence de présence de poisson dans des zones maritimes, et donc pour prédire les zones de pêche.

La FIGURE 2 est une représentation schématique d'un autre exemple de réalisation non limitatif d'un procédé selon la présente invention.

Le procédé 200 de la FIGURE 2 peut être utilisé pour prédire la présence de poisson en un point maritime. Le procédé 200 peut être réitéré pour plusieurs points maritimes, à tour de rôle ou de manière simultanée, formant une zone maritime pour prédire la présence de poisson dans ladite zone maritime. Ainsi, le procédé 200 peut être utilisé pour détecter les zones de pêche.

Le procédé 200 peut être utilisé pour prédire la présence, et donc détecter les zones de pêche, pour une espèce de poisson, ou pour plusieurs espèces de poisson. Dans la suite, et sans perte de généralité, le procédé 200 est utilisé pour prédire la présence, et donc détecter les zones de pêche, pour une seule espèce de poisson, tel que par exemple la sole.

Le procédé 200 comprend toutes les étapes du procédé 100 de la FIGURE 1.

Le procédé 200 comprend en outre, avant les étapes du procédé 100, une phase 202 d'entrainement du premier modèle, en particulier lorsque le premier modèle est un réseau de neurones récurrent à apprentissage profond, tel que le réseau de neurones PredRNN++.

La phase d'apprentissage 202 est réalisée avec une base B1 de jeux d'entrainement. Chaque jeu d'entrainement comprend des températures mesurées sur MxN jours qui se suivent.

La phase d'entrainement est réitérée plusieurs fois. Lors de chaque itération de la phase d'entrainement 202 les opérations suivantes sont réalisées :
- pour chaque jeu d'entrainement :
   ▪ les températures mesurées des M jours sont données en entrées du réseau neuronal pour estimer des températures pour les N jours suivants ;
   ▪ les températures mesurées des N jours sont utilisées pour estimer une erreur individuelle pour ledit jeu d'entrainement :
      l'erreur peut être la différence entre les températures estimées par le réseau de neurones pour les N jours et les températures réellement mesurées pour les N jours ;
- pour l'ensemble du jeu d'entrainement: une erreur globale est calculée à partir des erreurs individuelles obtenues pour tous les jeux d'entrainement. Par exemple l'erreur globale peut être la somme de toute les erreurs individuelles ; et
- les coefficients du réseau de neurones sont mis à jour, par un algorithme d'apprentissage en fonction de l'erreur globale. Par exemple, l'algorithme d'apprentissage peut être l'algorithme de rétropropagation du gradient.

L'entrainement du réseau neuronal peut être testé sur une partie du jeu d'entrainement non utilisée pour l'apprentissage.

Alternativement, l'entrainement du réseau neuronal peut être testé en fonction de l'évolution de l'erreur globale. Par exemple, le réseau neuronal peut être considéré comme suffisamment entrainé lorsque l'erreur globale ne varie pas pendant cinq itérations de la phase d'entrainement.

Le procédé 200 comprend en outre, avant les étapes du procédé 100, une phase 204 d'entrainement du deuxième modèle.

La phase d'apprentissage 204 est réalisée avec une base B2 de jeux d'entrainement. Chaque jeu d'entrainement comprend :
- des températures mesurées pour N jours, et
- des données de présence de poisson mesurées sur lesdits N jours.

Les données de présence de poisson peuvent être obtenues depuis une base de données alimentées par les entreprises de pêche. Les données de présence de poisson données en entrée du modèle peuvent être des données transformées en probabilités, en particulier normalisées.

La phase d'entrainement 204 est réitérée plusieurs fois. Lors de chaque itération de la phase d'entrainement 204 les opérations suivantes sont réalisées :
- pour chaque jeu d'entrainement :
   ▪ les températures mesurées des N jours sont données en entrées du deuxième modèle pour estimer des probabilités de présence de poisson pour les N jours ;
   ▪ les probabilités de présence de poisson mesurées des N jours sont utilisées pour estimer une erreur individuelle pour ledit jeu d'entrainement : l'erreur peut être la différence entre les probabilités estimées par le deuxième modèle pour les N jours et les données de présence de poisson réellement mesurées pour les N jours ;
- pour l'ensemble du jeu d'entrainement: une erreur globale est calculée à partir des erreurs individuelles obtenues pour tous les jeux d'entrainement. Par exemple l'erreur globale peut être la somme de toute les erreurs individuelles ; et
- les coefficients du deuxième modèle sont mis à jour, par un algorithme d'apprentissage en fonction de l'erreur globale.

Lorsque le deuxième modèle est un arbre décisionnel, et en particulier un « Gradient Boosting Decision Tree », l'algorithme d'apprentissage du deuxième modèle peut être un algorithme basé sur les histogrammes.

L'entrainement du deuxième modèle peut être testé sur une partie du jeu d'entrainement non utilisée pour l'apprentissage.

Les phases d'entrainement 202 et 204 peuvent être réalisées à tour de rôle ou en même temps.

Lorsque les étapes du procédé 100 sont réitérées plusieurs fois pour différents points maritimes, les phases d'apprentissage 202 et 204 peuvent être réalisées une seule fois avant la première itération des étapes du procédé 100.

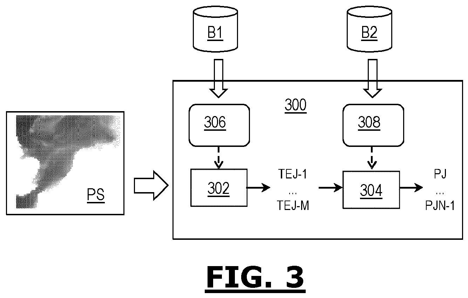

La FIGURE 3 est une représentation schématique d'un exemple de réalisation non limitatif d'un dispositif selon la présente invention.

Le dispositif 300 de la FIGURE 4=3 peut être utilisé pour mettre en œuvre un procédé selon l'invention, et en particulier le procédé 100 de la FIGURE 1 ou le procédé 200 de la FIGURE 2.

Le dispositif 300 comprend au moins un module 302 d'estimation de température exécutant le premier modèle d'estimation de température(s) sur au moins un jour futur à partir de(s) température(s) mesurée(s) sur un ou plusieurs jours passés.

Le dispositif 300 comprend au moins un module 304 d'estimation de probabilité de présence de poisson exécutant le deuxième modèle d'estimation de probabilité de présence de poisson sur au moins un jour futur à partir de(s) température(s) estimée(s) pour ce(s) jour(s) futur(s), par le premier module.

Optionnellement, le dispositif 300 peut comprendre au moins un module 306 d'entrainement du premier modèle avec la première base de jeux d'entrainement B1.

Optionnellement, le dispositif 300 peut comprendre au moins un module 308 d'entrainement du deuxième modèle avec la deuxième base de jeux d'entrainement B2.

Au moins un des modules 302-308 peut être un module matériel, tel qu'un processeur, une puce électronique, un calculateur, un ordinateur, un serveur, etc.

Au moins un des modules 302-308 peut être un module logiciel, tel qu'une application, un programme d'ordinateur, une machine virtuelle, etc.

Au moins un des modules 302-308 peut être un module individuel et indépendant des autres modules 302-308.

Au moins deux des modules 302-308 peuvent être intégrés au sein d'un même module.

Le dispositif 300 peut se présenter sous une forme matérielle, tel qu'un ordinateur, un serveur, un processeur, une puce électronique, etc.

Le dispositif 300 peut se présenter sous une forme logicielle tel qu'un programme d'ordinateur, ou une application, par exemple une application pour un appareil utilisateur de type tablette ou Smartphone.

Bien entendu l'invention n'est pas limitée aux exemples qui viennent d'être décrits. Par exemple, le nombre de jour(s) passé(s) et le nombre de jour(s) futur(s) n'est pas limité aux exemples donnés.

## Revendications

1. Procédé (100;200) de prédiction de présence de poisson en un point maritime, ledit procédé (100;200) comprenant les étapes suivantes :
- estimation (104), de températures estimées audit point maritime pour un nombre N de jour(s) futur(s), suivant immédiatement la date actuelle, par un premier modèle prenant en entrée des températures mesurées audit point maritime sur un nombre M de jour(s) passé(s) précédent immédiatement ladite date actuelle ; et
- prédiction (106), pour chaque jour futur, d'une probabilité de présence de poisson, par un deuxième modèle prenant en entrée la température estimée pour ledit jour futur.

2. Procédé (100;200) selon la revendication précédente, **caractérisé en ce que** la température mesurée d'au moins un point maritime pour au moins un jour passé est obtenue à partir d'une image satellite (PS) comprenant ledit point maritime.

3. Procédé (100;200) selon l'une quelconque des revendications précédentes, **caractérisé en ce qu'**il comprend une prédiction d'une probabilité de présence de poisson pour plusieurs points maritimes formant une zone maritime.

4. Procédé (100;200) selon la revendication précédente, **caractérisé en ce qu'**il comprend une étape de calcul d'une probabilité de présence de poisson dans la zone maritime à partir des probabilités estimées pour plusieurs, et en particulier tous les, points maritimes formant une zone maritime.

5. Procédé (100;200) selon l'une quelconque des revendications précédentes, **caractérisé en ce que** le deuxième modèle est spécifique à une espèce de poisson.

6. Procédé (100;200) selon l'une quelconque des revendications précédentes, **caractérisé en ce que** N≥2 de sorte que la prédiction de probabilité est réalisée pour plusieurs jours futurs.

7. Procédé (100;200) selon l'une quelconque des revendications précédentes, **caractérisé en ce que** M≥2 de sorte que la prédiction de probabilité est réalisée à partir de données de température mesurées pour plusieurs jours passés.

8. Procédé (200) selon l'une quelconque des revendications précédentes, **caractérisé en ce qu'**il comprend en outre une phase (202) d'entrainement du premier modèle avec une première base de jeux d'entrainement comprenant chacun des températures mesurées sur MxN jours qui se suivent.

9. Procédé (200) selon l'une quelconque des revendications précédentes, **caractérisé en ce qu'**il comprend en outre une phase (204) d'entrainement dudit deuxième modèle avec une deuxième base de jeux d'entrainement comprenant chacun :
- des températures mesurées pour N jours, et
- des données de présence de poisson sur lesdits N jours.

10. Programme d'ordinateur comprenant des instructions exécutables qui, lorsqu'elles sont exécutées par un appareil informatique, mettent en en œuvre toutes les étapes du procédé (100;200) selon l'une quelconque des revendications précédentes.

11. Dispositif (300) de prédiction de présence de poisson en un point maritime comprenant des moyens configurés pour mettre en œuvre toutes les étapes du procédé (100;200) selon l'une quelconque des revendications 1 à 9.
